# EUROPEAN PATENT APPLICATION

(11) **EP 1 748 243 A2**
(43) Date of publication of application: **31.01.2007**
(21) Application number: 06118037.8
(22) Date of filing: 28.07.2006
(51) Int. Cl.: F16L 25/00

(54) **Packing for corrugated tubes**

(30) Priority: 29.07.2005 IT UD20050126
(71) Applicant: Plebani, Daniela, 25031 Capriolo BS (IT)
(72) Inventor: Plebani, Daniela, 25031 Capriolo BS (IT)
(74) Representative: Petraz, Gilberto Luigi

(57) **Abstract**

Packing (10) for corrugated tubes (11) partly inserted in a direction of insertion (D) into corresponding outer tubes (12) in order to achieve a pipeline. The packing (10) is housed in a corresponding corrugation (13) of the corrugated tube (11) and has a cross section comprising, in a single body, a first part (15) having a shape mating with the corrugation (13), and a second part (16) provided with at least a sealing lip (17) which contacts during use the outer tube (12), in order to guarantee the coupling seal. The first part (15) comprises a resting tongue (19) made on the part opposite the direction of insertion (D) of the corrugated tube (11) into the outer tube (12), and has an angled edge (20) which rests on a mating segment of outer surface (21) of the corrugated tube (11).

## Description

### FIELD OF THE INVENTION

The present invention concerns a packing for corrugated tubes able to be coupled coaxially with corresponding glass-shaped tubes or sleeves, in order to make conduits or other types of pipeline. To be more exact, the packing according to the present invention is housed in a corrugation of the corrugated tube and guarantees the hydraulic seal of the coupling between the corrugated tube and the outer tube.

### BACKGROUND OF THE INVENTION

Packings for corrugated tubes are known, housed inside a corresponding corrugation of the tube, in order to guarantee the hydraulic seal of the coupling between the corrugated tube and a glass-shaped tube or sleeve, coupled axially, for example in order to make a conduit or other pipeline.

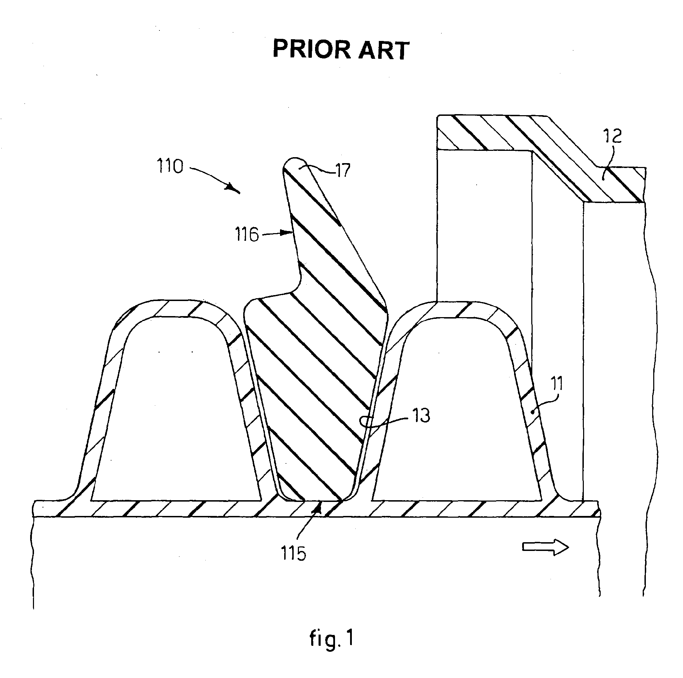

As shown in fig. 1, known packings 110 have a cross section shaped so as to define a first inner part 115 substantially trapezoid in shape, and mating with the housing corrugation 13, and a second outer part 116 provided with a sealing lip 17 which, in the assembled condition, thrusts against the outer tube 12, thus guaranteeing the hydraulic seal of the coupling.

Known packings 110, however, have various disadvantages during the steps of inserting the corrugated tube 11 inside the outer tube 12 since, due to the effect of the friction that is generated with the latter, the packing 110 tends to turn over on the side opposite the direction of insertion, and may slip out of the corrugation 13 and in any case does not guarantee an optimum hydraulic seal.

Therefore, the operations to assemble the packing 110 and to insert the corrugated tube 11 into the outer tube 12 are considerably long and laborious.

A purpose of the present invention is to achieve a packing for corrugated tubes which autonomously maintains its positioning during the steps of inserting the corrugated tube into the outer tube, and guarantees the hydraulic seal of the coupling between the two.

The Applicant has devised, tested and embodied the present invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

In accordance with the above purpose, a packing according to the present invention is applied to corrugated tubes able to be at least partly inserted, in a direction of insertion, into corresponding outer tubes in order to make a pipeline.

To be more exact, the packing according to the present invention is able to be at least partly housed in a corresponding outer corrugation of the corrugated tube and has a cross section having, in a single body, a first inner part with a shape mating with the corrugation, and a second outer part provided with a sealing lip able to contact during use an inner surface of the outer tube, in order to guarantee the sealed coupling between the two tubes.

According to a characteristic feature of the present invention, the first inner part comprises a resting tongue made on the part opposite the direction of insertion of the corrugated tube into the outer tube; the tongue has an angled, and possibly rounded, edge able to rest on a mating segment of the outer surface of the corrugated tube, in order to contrast the emergence of the first part from the corrugation.

In this way, during the axial insertion of the corrugated tube into the outer tube, the resting tongue contrasts the force exerted by the friction generated between the latter and the sealing lip, thus preventing the packing from turning over and hence accidentally slipping out of the relative corrugation.

With the present invention, the correct positioning of the packing is thus guaranteed between the two tubes also after they have been reciprocally coupled axially, thus facilitating the coupling operations and guaranteeing an optimum hydraulic seal.

In a preferential form of embodiment, the first inner part also comprises, on the side opposite the resting tongue, and therefore on the insertion side in the outer tube, an insertion tongue able to rest on a relative segment of the outer surface of the corrugated tube in order to increase the contact surface with the corrugated tube itself, and shaped so as to facilitate both the reciprocal axial insertion of the corrugated tube into the outer tube, and also the correct positioning of the sealing lip between the two tubes, thus further facilitating the coupling operations and improving the sealing conditions.

More particularly, the insertion tongue has a protruding shape substantially mating with the shape of an external segment of the tube, by having a rounded profile which rests on a mating segment of the top of the external surface of the corrugated tube.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 shows a cross section of a packing for corrugated tubes according to the state of the art, in an inactive condition;
- fig. 2 shows a cross section of a packing for corrugated tubes according to the present invention in an inactive condition;
- fig. 3 shows an improved variant of the packing in fig. 2.

### DETAILED DESCRIPTION OF A PREFERENTIAL FORM OF EMBODIMENT

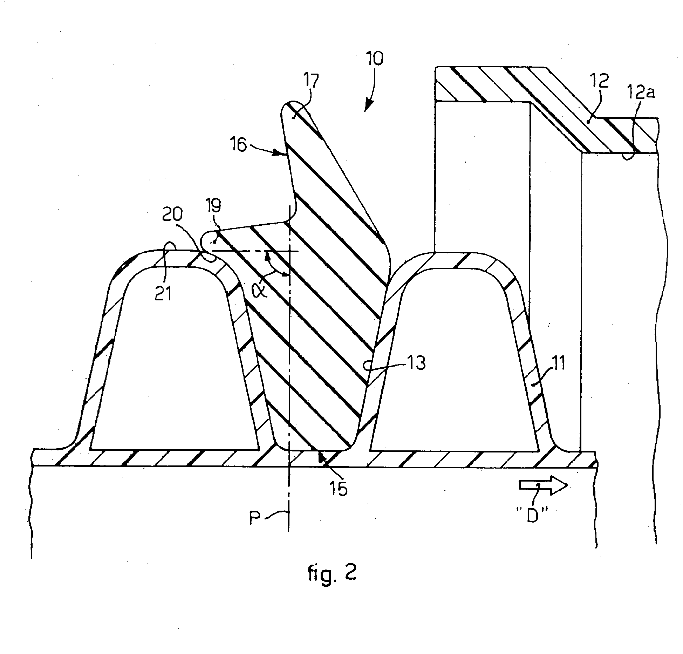

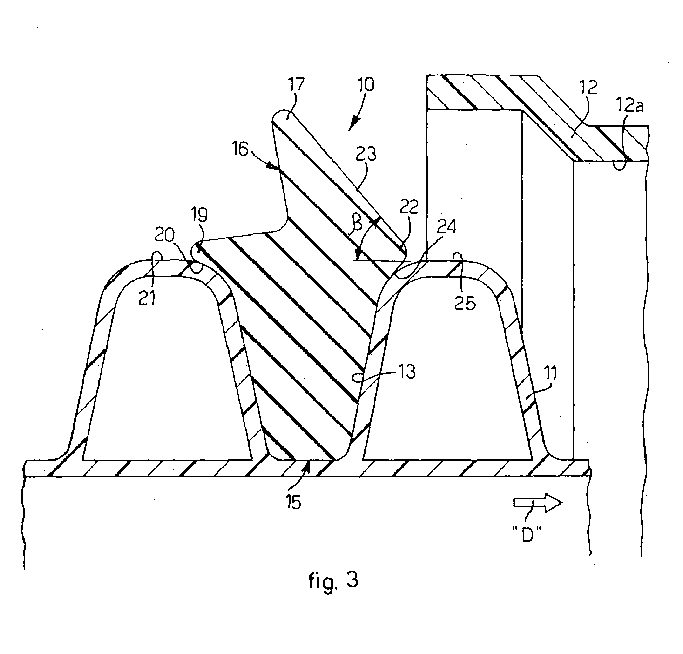

With reference to figs. 2 and 3, a packing 10 according to the present invention is made of elastomer material, has a substantially annular shape and is partly housed in a corresponding corrugation 13 of a corrugated tube 11, the latter of the type able to be at least partly inserted axially, in a direction of insertion D, into a corresponding outer tube 12, or sleeve, in order to make a pipeline.

The packing 10 according to the present invention is able to guarantee, in an operating condition, the hydraulic seal of the axial coupling between the corrugated tube 11 and the outer tube 12.

To be more exact, the packing 10 according to the present invention comprises an inner part 15 substantially trapezoid in shape and of a size mating with the corrugation 13, and an outer part 16 provided with a sealing lip 17, normally erect, which in the coupled condition of the two tubes 11 and 12 is bent over the inner part 15 and exploits its elasticity in order to thrust radially against an inner surface 12a of the outer tube 12.

The inner part 15 is almost completely housed in the corrugation 13 and in this case comprises a resting tongue 19 made on the part opposite the direction of insertion D, and able to rest with an angled and rounded edge 20 thereof on a segment 21 of the outer surface of the corrugated tube 11.

The angled edge 20 is inclined so as to form with a plane P, substantially perpendicular to the axis of insertion of the corrugated tube 11, an angle α comprised between about 45° and about 100°, so as to define a base for the packing 10 to rest on the outer surface of the corrugated tube 11.

The amplitude of the angle α thus allows to contrast the moment generated by the friction forces which develop between the outer tube 12 and the sealing lip 17 during the steps of inserting the corrugated tube 11, maintaining the packing correctly inside the corrugation 13.

Advantageously, the resting tongue 19 protrudes from the inner part 15 by an amount less than 1/3 of the total width of the cross section of the packing 10.

In the improved variant shown in fig. 3, the inner part 15 also comprises an insertion tongue 22, made on the part opposite the resting tongue 19, and having a rounded edge able to rest with a resting edge 24 on a corresponding plane segment 25 of the outer surface of the corrugated tube 11, and particularly on the top of a protrusion thereof, so as to increase the surface of the packing 10 resting on the corrugated tube 11.

The insertion tongue 22, which protrudes from the body of the packing 10, dividing the inner part 15 from the outer part 16 thereof in the direction D of insertion, also comprises an insertion edge 23, disposed to connect the plane segment 25 with the sealing tongue 17, and inclined with respect to the resting edge 24 by an angle β variable between about 30° and about 70°, so as to define a lead-in to the axial insertion of the corrugated tube 11 into the outer tube 12, and thus facilitate the correct positioning of the sealing tongue 17 in the coupled condition of the two tubes 11 and 12.

The insertion tongue 22 also has the function of compensating the possible differences in the amplitude of the corrugation 13 between various tubes 11, normally due to the plastic material of which the tubes 11 are made or the type of working they are subjected to, and thus allows to obtain an optimum positioning of the packing 10, and hence guarantees an optimum sealing action.

Advantageously, the resting edge 24 is normally at a lower height than the angled edge 20, so that, when the sealing lip 17 is bent into the coupling position between the two tubes 11 and 12, each consequent structural deformation is compensated, thus guaranteeing, in every operating condition, the correct positioning of the packing 10 and consequently its sealing action.

It is clear, however, that modifications and/or additions of parts may be made to the packing 10 as described heretofore, without departing from the field and scope of the present invention.

## Claims

1. Packing for corrugated tubes (11) able to be at least partly inserted in a direction of insertion (D) into corresponding outer tubes (12) in order to achieve a pipeline, said packing being able to be housed in a corresponding corrugation (13) of the corrugated tube (11) and having a cross section comprising, in a single body, a first inner part (15) having a shape mating with said corrugation (13), and a second outer part (16) provided with at least a sealing lip (17) able to contact during use said outer tube (12), in order to guarantee the coupling seal, **characterized in that** said first inner part (15) comprises a resting tongue (19) made on the part opposite said direction of insertion (D) of said corrugated tube (11) into said outer tube (12), and having an angled edge (20) able to rest on a mating segment of outer surface (21) of said corrugated tube (11).

2. Packing as in claim 1, **characterized in that** said angled edge (20) is at least partly rounded.

3. Packing as in claim 1 or 2, **characterized in that** said angled edge (20) is inclined so as to form with a plane (P), substantially perpendicular to the axis of insertion of said corrugated tube (11) into said outer tube (12), a determinate angle (α) having an amplitude comprised between about 45° and about 100°.

4. Packing as in any claim hereinbefore, **characterized in that** said resting tongue (19) protrudes from said first part (15) by an amount less than about 1/3 of the width of the cross section of said packing (10).

5. Packing as in any claim hereinbefore, **characterized in that** said first inner part (15) also comprises an insertion tongue (22), made on the part opposite said resting tongue (19), and able to rest with a resting edge (24) on a corresponding segment of outer surface (25) of said corrugated tube (11).

6. Packing as in claim 5, **characterized in that** said insertion tongue (22) has a substantially rounded profile which rests on a mating segment of the external surface of said tube.

7. Packing as in claim 6, **characterized in that** said insertion tongue (22) also comprises an insertion edge (23), able to connect said corresponding segment of outer surface (25) with said sealing tongue (17), and inclined with respect to said resting edge (24) by a determinate angle (β) having an amplitude variable between about 30° and about 70°.

8. Packing as in claims 1 and 5, **characterized in that** said resting edge (24) is normally at a lower height than said angled edge (20).
